# EUROPÄISCHE PATENTANMELDUNG

(11) **EP 2 810 736 A1**
(43) Veröffentlichungstag der Anmeldung: **10.12.2014**
(21) Anmeldenummer: 13166606.7
(22) Anmeldetag: 06.05.2013
(51) Int. Cl.: B23K 26/06, B23K 26/08, B23K 26/20, B23K 26/60

(54) **Laserschweißverfahren und -vorrichtung mit Vorwärmung**

(71) Anmelder: Siemens Aktiengesellschaft, 80333 München (DE)
(72) Erfinder: Burbaum, Bernd, Dr., 14612 Falkensee (DE)

(57) **Zusammenfassung**

Durch die Verwendung zweier Laser (4,7), die nicht mechanisch miteinander verbunden sind, sondern deren Strahlen miteinander verkoppelt werden, ist eine Vorwärmung und ein Um- oder Aufschmelzen sehr einfach möglich.

## Beschreibung

Die Erfindung betrifft eine Vorrichtung, die beim Schweißen eingesetzt wird und ein Verfahren zum Schweißen und Vorwärmen.

Beim Umschmelzen oder Auftragsschweißen von metallischen Werkstoffen, insbesondere von spröden Materialien wie Nickelbasissuperlegierungen, müssen die Heißrisse beim Erstarrungsvorgang vermieden werden.

Um dies zu vermeiden, wird oft eine Vorwärmung verwendet, die durch Induktionsschleifen erreicht wird. Dies ist jedoch eher aufwändig und für gewisse Bereiche von komplexeren Geometrien schwierig anzupassen.

Es ist daher Aufgabe der vorliegenden Erfindung, ein System und ein Verfahren vorzuschlagen, das sich einfacher realisieren lässt und bei komplexen Geometrien sich flexibel anpassen kann.

Die Aufgabe wird gelöst durch eine Vorrichtung gemäß Anspruch 1 und ein Verfahren gemäß Anspruch 6.

In den Unteransprüchen sind weitere vorteilhafte Maßnahmen aufgelistet, die beliebig miteinander kombiniert werden können, um weitere Vorteile zu erzielen.

Die Vorteile der Vorrichtung und des Verfahrens liegen in einer Vereinfachung der Anlagentechnologie und eine Reduzierung oder Beseitigung von Heißrissen.

Es zeigen:

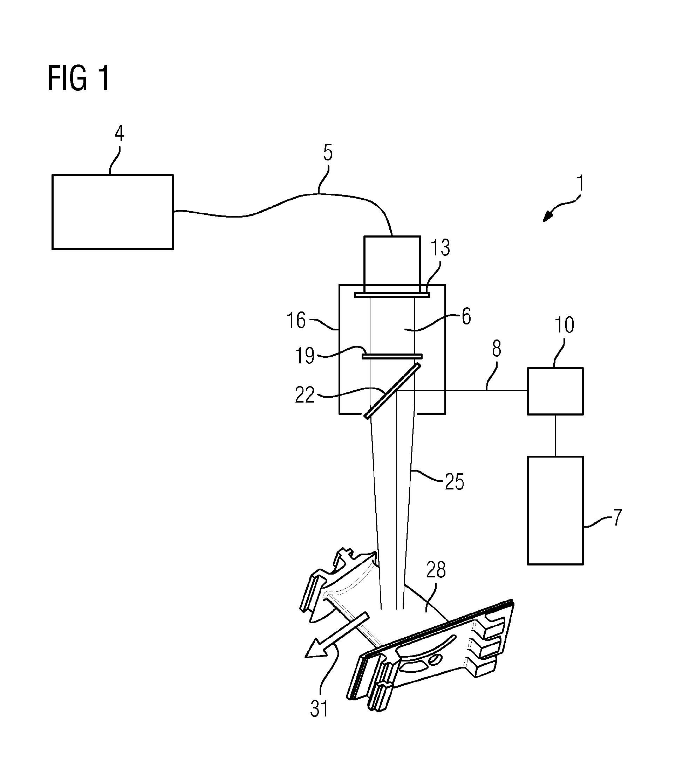

- Figur 1: ein Beispiel einer erfindungsgemäßen Vorrichtung,
- Figur 2, 3: Intensitätsverteilungen.

Die Figur und die Beschreibung stellen nur Ausführungsbeispiele der Erfindung dar.

Die Vorrichtung 1 weist zwei Laser 4, 7 auf, insbesondere nur zwei Laser 4, 7.
Der erste Laser 4 wird zum Vorwärmen verwendet, wohingegen der zweite Laser 7 zum Umschmelzen verwendet wird.
Der erste Laser 4 koppelt seine Laserstrahlen 6, insbesondere über eine Faser 5, in ein optisches System 16 ein, das im Innern eine Kollimationslinse 13 und eine Fokussierlinse 19 aufweist.

Der zweite Laser 7 koppelt seine Laserstrahlen 8 über einen Scanner 10 und über einen dichroitischen Spiegel 22 in einen gemeinsamen Laserstrahl 25 ein, so dass eine gewünschte Temperaturstrahlung entsteht. Dadurch gelangt ein Laserstrahl 25 auf eine Oberfläche eines Bauteils 28.

Vorzugsweise werden in das optische System 16 zwei Laserstrahlen 6, 8 eingekoppelt, wobei die Wellenlänge des ersten Lasers 4 800nm bis 1000nm und die Wellenlänge des zweiten Lasers 7 1000nm bis 1100nm beträgt.

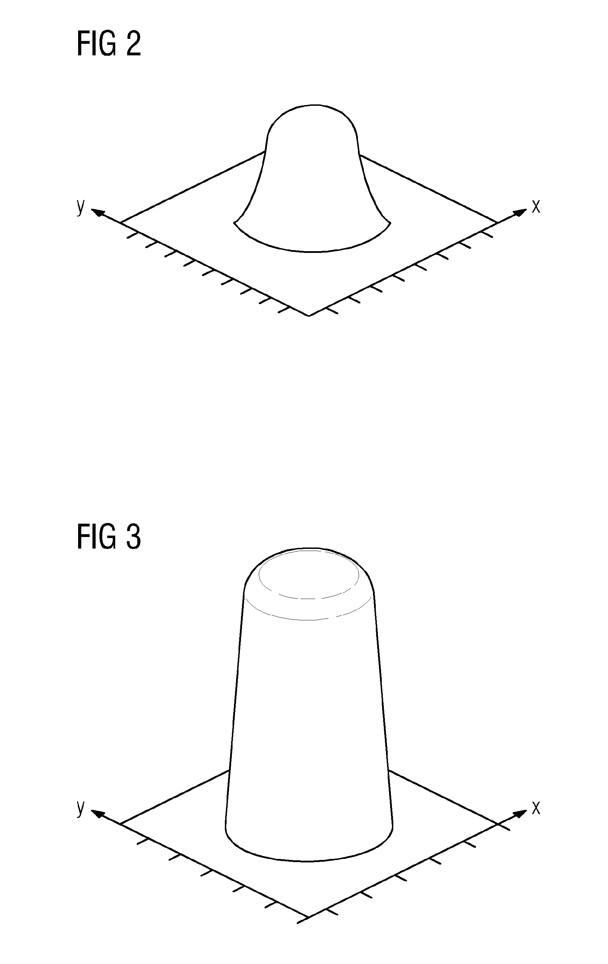

Der erste Laser 4 trägt zur Vorwärmung des Bauteils 28 bei und weist eine gaußförmige Intensitätsverteilung auf, wie in Figur 2 dargestellt.

Für den Umschmelzprozess oder Auftragsprozess wird die Laserstrahlung 8 des zweiten Lasers 7 über einen Scanner 10 abgelenkt und zusammen mit dem Laserstrahl 25 in eine Richtung 31 über das Bauteil 28 verfahren.

Somit kann an fast jeder beliebigen Stelle - wie auch im Übergangsbereich - zwischen Schaufelblatt und Schaufelplattform eine Vorwärmung stattfinden.

Figur 3 zeigt die Intensitätsverteilung der Laserstrahlen 8. Der Laserstrahl 8 ist innerhalb des Laserstrahls 6 angeordnet.

## Patentansprüche

1. Vorrichtung (1) zum Laserschweißen,
die zumindest aufweist:
einen ersten Laser (4),
einen zweiten Laser (7),
wobei die Laserstrahlen (6) des ersten Lasers (4) und die Laserstrahlen (8) des zweiten Lasers (7) über eine Optik (16) in einen Laserstrahl (25) miteinander verkoppelt werden.

2. Vorrichtung nach Anspruch 1,
bei dem die Wellenlänge der Laserstrahlen (6) des ersten Lasers (4) 800nm bis 1000nm beträgt.

3. Vorrichtung nach einem oder beiden Ansprüchen 1 oder 2, bei dem die Wellenlänge der Laserstrahlen (8) des zweiten Lasers (7) 1000nm bis 1100nm beträgt,
insbesondere > 1000nm bis 1100nm beträgt.

4. Vorrichtung nach einem oder mehreren der Ansprüche 1, 2 oder 3,
bei dem die Laserstrahlen (8) des zweiten Lasers (7) über einen Scanner (10) und einen dichroitischen Spiegel (22) zusammen mit den Laserstrahlen (6) des ersten Lasers (4) auf ein Bauteil (28) gelenkt werden können.

5. Vorrichtung nach einem oder mehreren der Ansprüche 1, 2, 3 oder 4,
wobei die Optik (16) eine Vollmaskenlinse (13) und eine Fokussierlinse (19) aufweist.

6. Verfahren zum Laserschweißen,
bei dem insbesondere eine Vorrichtung (1) nach einem oder mehreren der Ansprüche 1 bis 4 verwendet wird,
wobei ein erster Laserstrahl (6) zur Vorwärmung zusammen mit einem zweiten Laserstrahl (8) zum Um- oder Aufschmelzen über ein Bauteil (28) verfahren wird.

7. Verfahren nach Anspruch 6,
bei dem die Wellenlänge der Laserstrahlen (6) des ersten Lasers (4) 800nm bis 1000nm beträgt.

8. Verfahren nach einem oder beiden der Ansprüche 6 oder 7,
bei dem die Wellenlänge der Laserstrahlen (8) des zweiten Lasers (7) 1000nm bis 1100nm beträgt, insbesondere >1000nm bis 1100nm beträgt.
